# EUROPEAN PATENT SPECIFICATION

(11) **EP 3 134 821 B1**
(45) Date of publication and mention of the grant of the patent: **11.05.2022**
(21) Application number: 15886105.4
(22) Date of filing: 27.11.2015
(51) Int. Cl.: G06F 16/30, G06F 16/2453, G06F 16/2455

(54) **SYSTEM AND METHOD FOR PARALLEL OPTIMIZATION OF DATABASE QUERY USING CLUSTER CACHE**
SYSTEM UND VERFAHREN ZUR PARALLELEN OPTIMIERUNG EINER DATENBANKABFRAGE MIT CLUSTER-CACHE-SPEICHER
SYSTÈME ET PROCÉDÉ PERMETTANT UNE OPTIMISATION PARALLÈLE D'UNE INTERROGATION DE BASE DE DONNÉES À L'AIDE D'UNE ANTÉMÉMOIRE DE GRAPPES

(30) Priority: 24.03.2015 IN 1493CH2015
(43) Date of publication of application: 01.03.2017
(73) Proprietor: Huawei Technologies Co., Ltd., Shenzhen, Guangdong 518129 (CN)
(72) Inventor: RAMAMURTHI, Prasanna Venkatesh, Bangalore 560017 (IN); BEHERA, Mahesh Kumar, Bangalore 560017 (IN)
(74) Representative: Körber, Martin Hans
(86) International application number: PCT/CN2015/095808
(87) International publication number: WO 2016/150183

(56) References cited:
- WO-A1-2010/060179
- WO-A2-2010/039898
- US-A1- 2011 145 367
- US-A1- 2014 351 523
- US-A1- 2015 067 001
- US-B1- 6 278 989
- HAO DATENG ET AL: "DPAgg: A Dynamic Partition Aggregation on Multicore Processor in Main-Memory Database", 2013 IEEE 10TH INTERNATIONAL CONFERENCE ON HIGH PERFORMANCE COMPUTING AND COMMUNICATIONS & 2013 IEEE INTERNATIONAL CONFERENCE ON EMBEDDED AND UBIQUITOUS COMPUTING, IEEE, 13 November 2013 (2013-11-13), pages 1769-1777, XP032606168, DOI: 10.1109/HPCC.AND.EUC.2013.253 [retrieved on 2014-06-11]
- CHANGKYU KIM ET AL: "Sort vs. Hash revisited", PROCEEDINGS OF THE VLDB ENDOWMENT, vol. 2, no. 2, 31 August 2009 (2009-08-31) , pages 1378-1389, XP055344959, New York, NY ISSN: 2150-8097, DOI: 10.14778/1687553.1687564

## Description

### TECHNIAL FIELD

The present subject matter described herein, in general, relates to database management systems, and more particularly to a system and method for improving the performance of query execution where clustering improves the performance.

### BACKGROUND

A database system is generally used to answer queries requesting information from the database stored. A query may be defined as a logical expression over the data and the data relationships expressed in the database, and results in the identification of a subset of the database. In the recent advancements, database systems enable a single query execution to be run in parallel.

With the advancements of powerful hardware having parallel computing resources (like processors and processor cores), the computing is shifted from single threaded to multithreaded enabling a single query execution to be run in parallel. Many algorithms including parallel sorting algorithms like bitonic sort, parallel radix sort, advanced parallel algorithms like a werbuch-shiloach algorithm for graph processing, and the like have been designed to take advantage of multiple cores in parallel, and thus to improve the system performance.

One of the advancements in parallel computing was introduced by the use of asymmetric memory. Asymmetric memory is computer memory constructed in a way that it is divided into memory banks, each closely associated with a processor, and the cost of accessing the memory depends on whether the accessed bank is local, to the processor, or remote. An example of asymmetric memory implementation is NUMA (Non-Uniform Memory Access) architecture applied by most chip manufacturers.

However, with the increase in the number of CPUs in the systems, more and more work are being done in parallel. This leads to the invention of new and efficient intra query algorithms for example, parallel merge sort algorithm. But most of these algorithms have bottleneck of a merge phase.

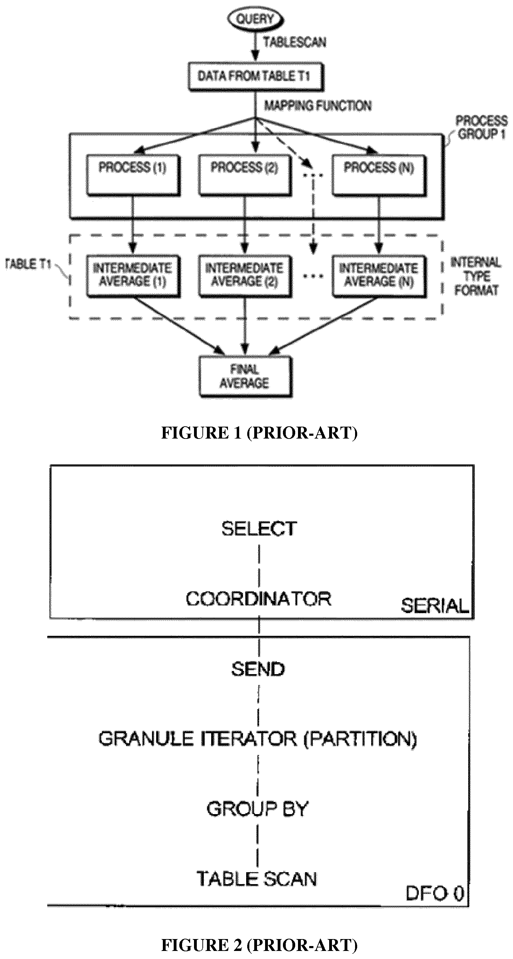

In analytical query processing, the operation link group aggregate, SORT, JOINS, but not limited to these, are considered to be the most frequently used and most expensive operations. One of the exemplary prior-art patent documents, US5850547 provides such solution by performing parallel processing of aggregate functions in a computing system, as shown in Figure 1. However, in case of group aggregates, the second merge phase (as per the solution provided in document '547) can be avoided by distributing the workload among different threads so that the merge phase can be avoided. But this requires partitioning of the data. Still, the partitioning of the data becomes expensive when the number of records to be partition is too large.

In some of the prior art, load time clustering is done. But the load time clustering will restrict the portioning to be limited to only single column and thus heavily restricts the number of queries which gets benefitted from the partitioning.

Hence, there was a need for a method that will adopt the user's working environment and uses the latest technology to provide a solution which will reduces the group aggregate cost and thus improves the overall system performance.

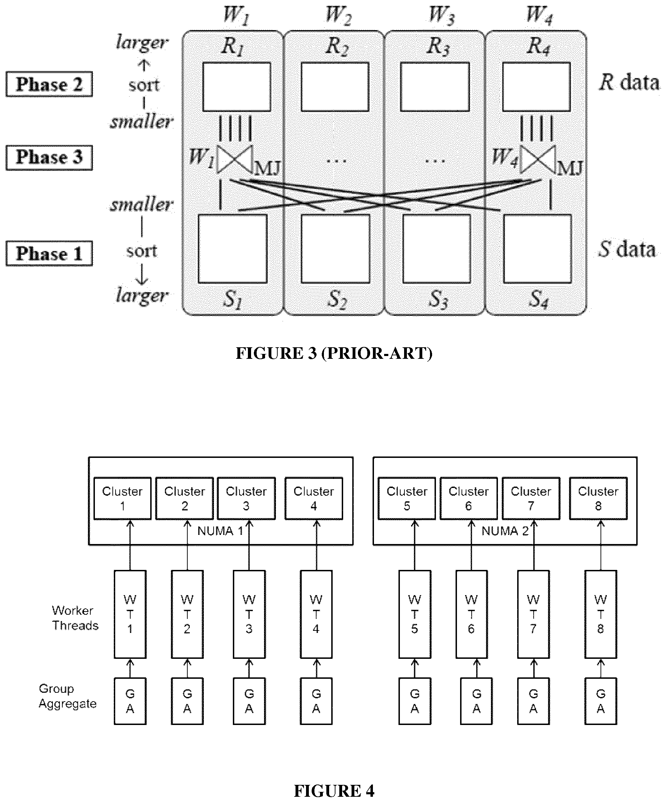

In order to achieve the above mentioned need and to solve the above mentioned problems in the prior-art, various solutions were provided, few of them include but not limited to:
- A solution provided in the prior-art document US7779008 that provide techniques for performing a parallel aggregation operation on data that resides in a container, such as a relational table. The partition the initial data to multiple pieces (or the data could be already partitioned)is as shown in the Figure 2.
- Another solution was provided by introducing B-MPSM portioned JOIN algorithm, wherein one thread/process for the execution of the aggregation on each node was assigned and then at the end the result of each node was summarized and then the results out was projected, as shown in the Figure 3.

Hao Dateng et al, "DPAgg: A Dynamic Partition Aggregation on Multicore Processor in Main-Memory Database", 2013 IEEE 10TH INTERNATIONAL CONFERENCE ON HIGH PERFORMANCE COMPUTING AND COMMUNICATIONS & 2013 IEEE INTERNATIONAL CONFERENCE ON EMBEDDED AND UBIQUITOUS COMPUTING, IEEE, 13 November 2013, pages 1769 - 1777 presents a new dynamic partition aggregation algorithm based on a group by value partition algorithm. First, the algorithm introduces a dynamic partition strategy into aggregation in order to make it more adaptive to different characteristic data. Secondly, it sets the optimized cache level to L2 not last level cache. Thirdly, the improvements that are proposed for Radix-Clustered hash join are also been modified and applied into aggregation in order to reduce overhead cost of partition operations.

WO 2010/039898 A2 relates to querying of column based data encoded structures enabling efficient query processing over large scale data storage, and more specifically with respect to complex queries implicating filter and/or sort operations for data over a defined window. In this regard, in various embodiments, a method is provided that avoids scenarios involving expensive sorting of a high percentage of, or all, rows, either by not sorting any rows at all, or by sorting only a very small number of rows consistent with or smaller than a number of rows associated with the size of the requested window over the data. In one embodiment, this is achieved by splitting an external query request into two different internal sub-requests, a first one that computes statistics about distribution of rows for any specified WHERE clauses and ORDER BY columns, and a second one that selects only the rows that match the window based on the statistics. In particular, the document discloses the caching of metadata, table and query details in addition to the query result set for further use.

WO2010/060179 discloses the clustering of data in response to a query, wherein the clustering is carried out according to metadata of the query and the query is executed against the clustered data.

However, the above mentioned solutions and other existing solutions in the prior-art have at least two major problems mentioned below, that includes but not limited to:
- For optimizing GROUPED AGGREGATIONS, fast clustering is not performed; and
- For JOIN algorithms clustering, which is already recommended by multiple papers, the clustering is done on the fly each time the query is executed.

Hence the major challenge in the existing / traditional query execution process is, based on above problems it may be clearly understood that, at a situation where each time the clustering has to be performed which is sub-optimal. So considering a case where either the same query is executed twice or two distinct queries are executed which need the same partitioning, and hence it may be understood by the person skilled in the art that both the queries will need to perform the clustering.

### SUMMARY

This summary is provided to introduce concepts related to a system and method for parallel optimization of database query using cluster cache are further described below in the detailed description. This summary is not intended to identify essential features of the claimed subject matter nor is it intended for use in determining or limiting the scope of the claimed subject matter.

**TECHNICAL PROBLEM:** There is a need to provide a mechanism that adapts to the users working environment and improves the group aggregate/sort/JOIN performance is required. Further, there is also a need to provide a mechanism to decide the amount of system memory that can be used to store the clustering information of a column. Further, the provided mechanism must reduce the group aggregate/sort/JOIN performance cost during the parallel intra query aggregation. Furthermore, in order to avoid the query execution time and to enhance the overall performance of the CPU, a mechanism such that clustering done for one operation/query can be reused by additional operations (like GROUP -> SORT -> JOIN) is required.

**TECHNICAL SOLUTION:** For solving the above mentioned problems and the other problems available in the prior-art a new concept of dynamic clustering for caching the clustering information is disclosed. The disclosed mechanism adapts to the users working environment and improves the group aggregate/sort/JOIN performance by caching the clustering information. Further, the disclosed mechanism improves the performance of group by aggregates/sort/JOIN (by avoiding the merge phase of parallel aggregation) with the use of dynamic clustering and further the overall performance of the CPU is optimized by caching the clustering information and storing them in local memory of worker thread. The caching of cluster information is based on user configuration to avoid overuse of system memory. For example, in the present invention the merge phase is avoided by using clustering. Clustering ensures the same data is not present in the two clusters. Hence there is no need to merge thereby avoiding excess time for the execution. Each cluster can be treated as independent entities.

The plurality of aspects provides a system and method for parallel optimization of database query using cluster cache. The technical solutions are as follows:
The present invention is defined by a system for parallel optimization of a database query requesting data from a database according to independent claim 1 and a method for parallel optimization of a database query requesting data from a database according to independent claim 5. Additional features of the invention are provided in the dependent claims.
In the following, parts of the description and drawings referring to embodiments which are not covered by the claims are not presented as embodiments of the invention, but as examples useful for understanding the invention.

### BRIEF DESCRIPTION OF THE ACCOMPANYING DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a solution by performing parallel processing of aggregate functions in a computing system as disclosed in the prior-art patent document US5850547.
Figure 2 illustrates a solution by the partition the initial data to multiple pieces (or the data could be already partitioned) as disclosed in the prior-art document US7779008.
Figure 3 illustrates B-MPSM portioned JOIN algorithm wherein one thread/process for the execution of the aggregation on each node was assigned and then at the end the result of each node was summarized and then the results out was projected.
Figure 4 illustrates a mechanism to improve the performance of group by aggregates by avoiding the merge phase of parallel aggregation with the use of dynamic clustering and further the system is optimized by caching the clustering information and storing them in local memory of worker thread, in accordance with an embodiment of the present subject matter.
Figure 5 illustrates a system for parallel optimization of a database query requesting data from a database, in accordance with an embodiment of the present subject matter.
Figure 6 illustrates a method for parallel optimization of a database query requesting data from a database, in accordance with an embodiment of the present subject matter.
Figure 7 illustrates a sample set of records with the schema for clustering is shown, in accordance with an embodiment of the present subject matter.

### DETAILED DESCRIPTION OF THE PRESENT INVNENTION

The following clearly describes the technical solutions in the embodiments of the present invention with reference to the accompanying drawings in the embodiments of the present invention.

The invention can be implemented in numerous ways, including as a process, an apparatus, a system, a composition of matter, a computer readable medium such as a computer readable storage medium or a computer network wherein program instructions are sent over optical or electronic communication links. In this specification, these implementations, or any other form that the invention may take, may be referred to as techniques. In general, the order of the steps of disclosed processes may be altered within the scope of the invention.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Systems and methods for parallel optimization of database query using cluster cacheare disclosed.

Referring now to figure 4, illustrates a mechanism to improve the performance of group by aggregates by avoiding the merge phase of parallel aggregation with the use of dynamic clustering and further the system is optimized by caching the clustering information and storing them in local memory of worker thread, in accordance with an embodiment of the present subject matter. The figure 4 shows two critical points, (1) wherein, the data is clustered into multiple chunks named as "Cluster 1", "Cluster 2" etc. and (2) wherein, there is a thread named worker threads attached to each of the clusters to process these clusters. In one typical implementation all the data which need to be grouped are clustered using any known clustering mechanism like radix cluster. Each cluster contains exclusive information i.e. no two clusters contain the same information. Each of these clusters are located in the memory attached with one or other NUMA nodes. To process the data in these clusters one thread is attached to each of the clusters. These threads are affined to the cores attached the corresponding NUMA node.

In one implementation, systems and methods are provided to improve the performance of group by aggregates by avoiding the merge phase of parallel aggregation with the use of dynamic clustering and further the system is optimized by caching the clustering information and storing them in local memory of worker thread. The caching of cluster information is based on user configuration to avoid overuse of system memory.

While aspects are described for improving the performance of group by aggregates by avoiding the merge phase of parallel aggregation with the use of dynamic clustering may be implemented in any number of different computing systems, environments, and/or configurations, the embodiments are described in the context of the following exemplary systems, devices, and methods.

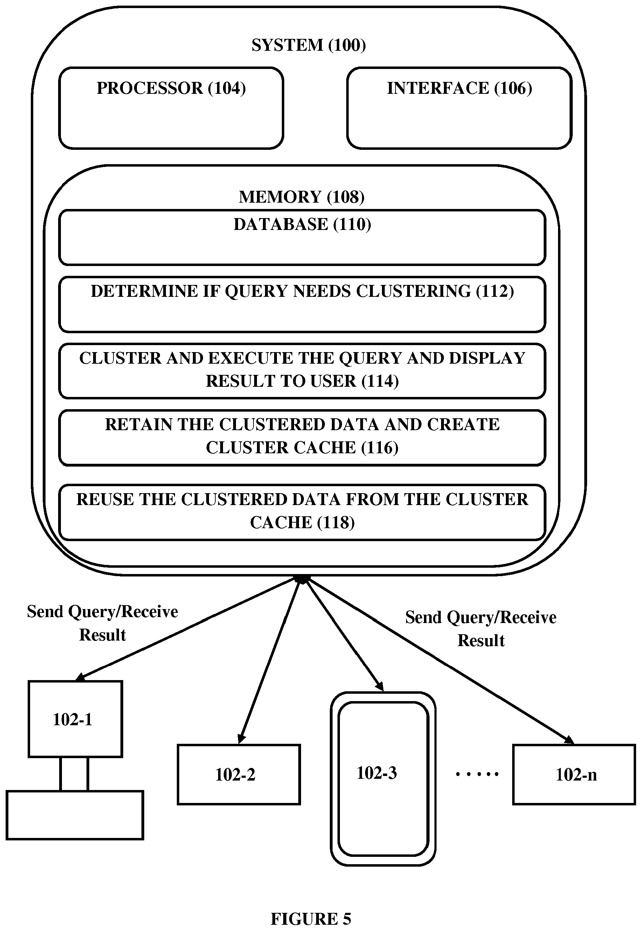

Referring now to figure 5 illustrates a system (100) for parallel optimization of a database query requesting data from a database (110), in accordance with an embodiment of the present subject matter.

In one implementation, the system comprises a database (110), a processor (104) coupled to a memory (108), and the processor (110) configured to determine (112), based on a nature and/or a statistics of the database query received, if the database query needs clustering; cluster (114), if determined the query needs clustering, data present in a database based on the database query received, and displaying result of the query to a user after query processing; retain (116) the clustered data, and thereby create at least one cluster cache comprising a cluster metadata, at least one data element, and the cluster data retained; and reuse (118) the clustered data from the cluster cache, when a new query is received and if the new query is matched with the data elements and/or cluster metadata, for query processing.

In one implementation, the system (100) is communicably coupled with the user devices / database client systems (102). Although the present subject matter is explained considering that the system (100) is implemented as a separate computing unit it may be understood that the system (100) may also be implemented on a server, in a variety of computing systems, such as a laptop computer, a desktop computer, a notebook, a workstation, a mainframe computer, a server, a network server, and the like. It will be understood that the system (100) may be accessed by multiple users through one or more user devices/client systems 102-1, 102-2...102-N, collectively referred to as user (102) hereinafter, or applications residing on the user devices 102. Examples of the user devices (102) may include, but are not limited to, a portable computer, a personal digital assistant, a handheld device, and a workstation. The user devices (102) are communicatively coupled to the system (100) through a network (not shown).

In one implementation, the network may be a wireless network, a wired network or a combination thereof. The network can be implemented as one of the different types of networks, such as intranet, local area network (LAN), wide area network (WAN), the internet, and the like. The network may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network may include a variety of network devices, including routers, bridges, servers, computing devices, storage devices, and the like.

In one implementation, the at least one processor (104) may be implemented as one or more microprocessors, microcomputers, microcontrollers, digital signal processors, central processing units, state machines, logic circuitries, and/or any devices that manipulate signals based on operational instructions. Among other capabilities, the at least one processor (104) is configured to fetch and execute computer-readable instructions stored in the memory (108).

The interface (106) may include a variety of software and hardware interfaces, for example, a web interface, a graphical user interface, and the like. The interface (204) may allow the client systems/users (102) to interact with a user directly or through the system (100). Further, the interface (106) may enable the system (100) to communicate with other computing devices, such as web servers and external data servers (not shown). The interface (106) can facilitate multiple communications within a wide variety of networks and protocol types, including wired networks, for example, LAN, cable, etc., and wireless networks, such as WLAN, cellular, or satellite. The interface (106) may include one or more ports for connecting a number of devices to one another or to another server.

The memory (108) may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory (108) may include at least one query compiler configured to prepare an execution plan in a tree structure, with a plurality of plan nodes, for the database query received. It shall be noted that the query compiler is a conventional compiler and the execution plan generation done in the tradition / convention approaches as available in the prior-art.

In one implementation the user (102) interacts with the system(100) by sending/firing a query to the database (110) located at the database server (not shown) or in the system (100).

In one implementation, the system (100) is configured to check if a query request from the database client is a candidate for /requires clustering. The check may be performed based on nature of the query and statistics. An example of the nature of the query may include but not limited to the type of query like JOIN or GROUP AGGREGATEs. If the nature of the query is amenable to clustering (typically JOIN, GROUP AGGREGATES, SORTs) then it can be chosen. Then the statistics is checked. If the query is going to select many records, then clustering is an option. The statistics are generally histogram based statistics and are basic concepts in database domain. The database then clusters the data and performs the operation provide in the query. At the end of the operation the result data is projected to the client.

In one implementation, after projecting the data to the client, the clustered data is retained by the system. This retention is termed as the "cluster cache". The detail of the cluster cache is explained in sections below.

In one implementation, when a second (or further or new) query comes from a client to the database/ database server. The database determines if this query can use clustering or the cluster cache. If the query can use the cluster cache, the database server checks if the clustered information is already available in the cluster cache. If the data is already available the database server will reuse the information in the cluster cache.

In one implementation, the clustered data from the cluster cache may be reused, if the clustered data is already available in the cluster cache and if available, reuse the clustered data for the processing of the new query.

In an implementation not claimed by the invention, the cluster cache may be updated using an incremental cache update model.

In one implementation, the nature of the database query received is the characteristics of the database query selected from the group comprising: (i) attributes of a GROUP BY clause, (ii) attributes of a WHERE clause, (ii) attributes of a JOIN clause, (iv) attributes of a HAVING clause, and (v) attributes of the grouped aggregation function.

In one implementation, the statistics is histogram based statistics. Statistics are traditionally computed in all DBMS. These statistics may be sample based and is stored as a histogram. The classical usage of statistics is for "selectivity estimation". The resent invention uses the same statistics to cluster our data. This histogram for selectivity estimation is explained in detail in the paper, "Improved histograms for selectivity estimation of range predicates." By Poosala, Viswanath, et al. ACM SIGMOD Record. Vol. 25. No. 2. ACM, 1996. In one implementation, the present invention may use only one kind of query statistics in this invention namely the "selectivity statistics". They are random sampled statistics. One kind of random sampling is the reservoir random sampling as explained in Vitter, Jeffrey S. "Random sampling with a reservoir." ACM Transactions on Mathematical Software (TOMS) 11.1 (1985): 37-57.

In one implementation, the clustering is performed by any one of the technique for clustering selected from radix based clustering, or hash based clustering, or any combination thereof.

In one implementation, the clustered data comprises at least one of global row id's or records stored in tables of the database, or subset of records stored in tables of the database based on the systems configuration.

In one implementation, the data elements comprises at least one of table Id, cluster column, clustering model, filter condition, memory affinity, or any combination thereof.

In one implementation, the query processing is performed by by a query optimizer.

In one implementation, the grouped aggregation function included in the database query is selected from the COUNT, AVG, SUM, MIN, MAX, VARIANCE, and STANDARD_DEVIATION aggregation functions.

In an implementation not claimed by the invention, the database query is composed in the SQL query language, and the memory is a asymmetric memory.

### CLUSTER CACHE:

In one implementation, to avoid the merge phase of parallel group aggregate operation, the table records are divided into different groups based on some radix bit.

In one implementation, not claimed by the invention, the division of tables makes sure that, the aggregate can be calculated for each group independently and there is no need of any merge.

In an implementation not claimed by the invention, the grouping will impact the group aggregate performance if it is done for each query execution. So a cache is designated for storing the clustering information of frequently used columns.

In one implementation, the clustering information may be the global row ids or the actual records or subset of records based on user input.

In an implementation not claimed by the invention, when group aggregate plan is generated, clustering information is used to assign the groups to each worker thread based on the data distribution.

In one implementation, to improve the performance of parallel algorithms the clustering mechanism is used. This clustering could be radix based or hash based.

In one implementation, the clustering information can be the global row ids or the actual records or subset of records based on database server configuration.

In one implementation, the technical advancement in the present invention is achieved by caching the clustered results so as to avoid clustering each time a specific query arrives. Clustering is an expensive operation even though it brings significant performance benefits for the parallel algorithms.

### CLUSTER CACHE MANAGEMENT

In an implementation not claimed by the invention, the size of the cluster cache may be managed through user input configuration values and can be increased or decreased through SQL commands. The size of the cluster cache can be expressed in terms of bytes and can be typically 10MB.

In an implementation not claimed by the invention, if the cache size is reached to maximum and a new request comes for adding cluster information for a new column, then the least recently or the least frequently used column's clustering information may be removed from the cache.

In an implementation not claimed by the invention, the addition, if new clustering information is received, may be done by user, using a SQL command or can be done internally by the optimizer based on system load information. For example, assume incase we are executing a new query like "SELECT max(f1) FROM t1 GROUP BY f2". This query can explicitly clustered and cached by a hint from the user of the form "SELECT max(f1) FROM tl GROUP BY f2 /^{∗}Hint:Cluster Cache^{∗}/This query can also be implicitly clustered and cached by the optimizer

In an implementation not claimed by the invention, the cluster information is stored in separate memory location based on the number of NUMA node and other system configuration.

In an implementation not claimed by the invention, when system data changes, snapshot may taken for the newly modified data and an incremental update is done of the cluster information to reduce the overhead of write operations. It may be understood by the person skilled in the art that, one of the critical problems of caching is when to update the cache. The naive approach towards this is to periodically say once in 1 min, delete the cache and rebuild the cache by scanning all relevant rows. If the cache was holding 10M data then this approach requires us to write 10M. The present invention provides an approach to use a delta update on the histogram based cache. In one example, one idea on the delta update is provided in the following patent, Chaudhuri, Surajit, Rajeev Motwani, and Vivek Narasayya. "Histogram construction using adaptive random sampling with cross-validation for database systems." U.S. Patent No. 6,278,989. 21 Aug. 2001
an implementation not claimed by the invention, the cluster is cached as described in the cluster cache section. When writes happen to the database, it is possible that the cached data does not reflect the current information. One obvious choice is to recreate the whole cache on data change. But this is expensive. So in the present invention enables to update the existing cache using an incremental cache update model. In this case when a write happens to the data, system determines if the data is already cached. This can be trivially computed by the data structures mentioned in the previous (cluster cache) section. If the data is already cached suitable modifications is done to the cache. For example if a record is deleted, then the corresponding data is deleted from the cache too.

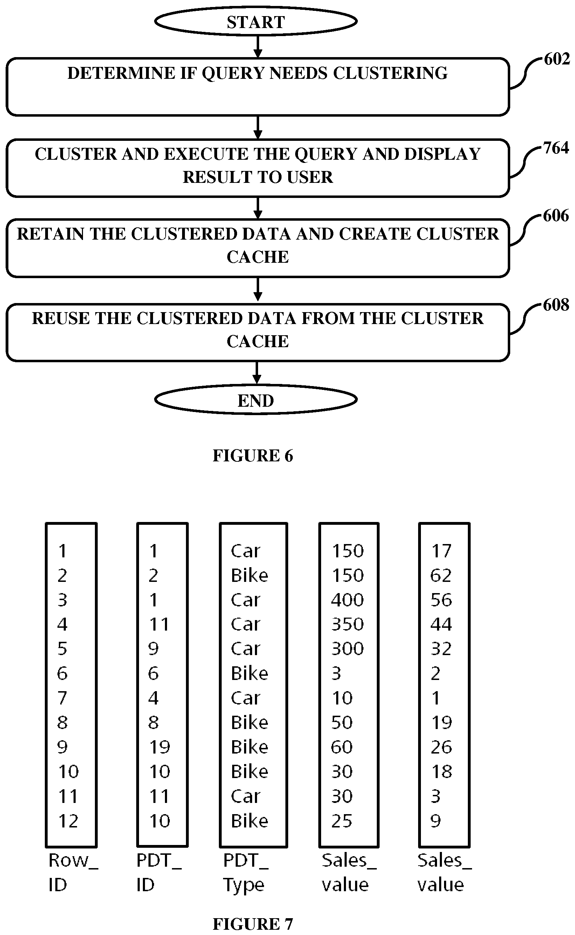

Figure **6** illustrates a method for parallel optimization of a database query requesting data from a database, in accordance with an embodiment of the present subject matter. The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

The order in which the method is described is not intended to be construed as a limitation, and any number of the described method blocks can be combined in any order to implement the method or alternate methods. Additionally, individual blocks may be deleted from the method without departing from the scope of the subject matter described herein. Furthermore, the method can be implemented in any suitable hardware, software, firmware, or combination thereof. However, for ease of explanation, in the embodiments described below, the method may be considered to be implemented in the above described system (100).

At block 602, the database query is received and the system determines if the query received needs clustering.

At block 604, the database query received is executed in the conventional manner and the result based on the execution is displayed to the user.

At block 606, after the query is executed and the result is displayed to the user, the system retains the clustered data and thereupon creates cluster caches.

At block 608, when the system receives a new query the clustered pre-stored caches are checked if the query received may use the clustered data from them. If the system determines that the data may be reused for processing the query it fetches the cluster cache and the data associated with the cache for further processing.

In one implementation, the method comprises reusing the clustered data for the processing of the new query, if the clustered data is already available in the cluster cache.

In one implementation, the method comprises updating the cluster cache using an incremental cache update model.

In one implementation, the nature of the query received is a type of query like JOIN or GROUP AGGREGATE, SORT (ORDER BY), or any combination thereof.

In one implementation, wherein the clustering is performed by any one of the technique for clustering selected from radix based clustering, or hash based clustering, or any combination thereof.

In one implementation, the clustered data comprises at least one of global row id's or records stored in tables of the database, or subset of records stored in tables of the database based on the systems configuration.

In one implementation, the data elements comprises at least one of table Id, cluster column, clustering model, filter condition, memory affinity, or any combination thereof.

In one implementation, the grouped aggregation function included in the database query is selected from the COUNT, AVG, SUM, MIN, MAX, VARIANCE, and STANDARD_DEVIATION aggregation functions.

### WORKING EXAMPLE:

**EXAMPLE 1:**In example provided below, it is shown that how the system/database/server can determine if the query can use clustering:
It may be known and understood by the persons skilled in that art that, there is a fixed set of queries which benefit from clustering, which includes but not limited to, GROUP AGGREGATES, JOIN, SORT (ORDER BY). Let these clauses be referred to as the "cluster clauses" for the understanding purpose. These queries benefit from clustering based on two conditions as give below:
1. Is the selectivity of the cluster clauses of the query high enough to be partitioned? For example a filter is applied on the query, and the resultant records are only 100. This is the selectivity of the cluster clause (100), which is too low for partitioning.
2. Is the cardinality of the cluster clauses of the query high enough to be partitioned? For example a filter is applied on the query, and the resultant records are of 10 types. This is the cardinality of the cluster clause (100), which is too low for partitioning.

The above two conditions are explained with the help of below mentioned example:
Assume a table has 1M records. A sample set of records with the schema is as shown in Figure 7.

Let us consider the following query:
**"SELECT SUM(sales_value), SUM(sales_piece) FROM dimension_tab GROUP BY pdt_id WHERE pdt type = 'car';"**

The clustering clause here is the "GROUP BY" (GROUPED AGGREGATE) clause.The number of entries in the table for the product type 'car' forms the selectivity of the clustering clause. The number of unique products (represented by PDT_ID) of the type 'car' forms the cardinality of the clustering clause.

If for example in 1M records, there are only 1000 products of type "car", then the selectivity is 1000.

If for example in 1M records, there are 1000 products of type "car", but there are only 10 kinds of 'car' products, then the cardinality is 10.

**EXAMPLE 2:**In the example provided below, the notion of how the cluster cache is stored in the database/ database server and how a cluster set on the arrival of a query is searched/looked up is described.

In one implementation, the structure of cluster cache is as given below:

```
 Struct Cluster_Cache {
            Cluster_Cache_Metadata metadata;
            Cluster cached_elements[];
            }
            Struct Cluster {
     Char bit_pattern;
     Long row_id[];
     }
```

From cluster structure it may be understood that the structure it is mainly made up of two parts: the metadata and the cluster data itself. The cluster data is fairly straight forward. Some notion of the row should be cached in the cluster data. It could be only row_id or could be the entire row itself. Both choices are fine. In the above shown examplethe row_id is used. However the metadata is trickier. It is explained in the below table and with the help of example query:
**"SELECT SUM(sales_value), SUM(sales_piece) FROM dimension_tab GROUP BY pdt_id WHERE pdt type = 'car';"**

| ***Data Element*** | ***Description*** | ***Remarks*** |
|---|---|---|
| Table ID | The identification of the | In the example, this value will be |
| | table for which this cache is built | "dimenstion_tab" |
| Cluster Column | The column on which the cluster is built. | In the example, this value will be "pdt_id" |
| Clustering Model | Associated clustering techniques and meta-data | This could be hash clustering or radix clustering. Associated meta-data could be the hash key for hash clustering, number of radix-bits for radix clustering. |
| Filter condition | The filter condition applied before we clustered the data | In the example this value will be **WHERE pdt_type='car'** |
| Memory affinity | Location of majority of the cluster data. | In a NUMA system, there are multiple memory banks. During clustering it is possible that most of the data (>50%) is in a specific bank. Then this element is set. If the data is evenly distributed on all banks, then this is blank. |

Based on the meta-data of the cluster-cache it may be determined for a given query if it is already cached or not. This is explained with the three queries and the calculations are performed:
1. Let the first query arriving be **"SELECT SUM(sales_value), SUM(sales_piece) FROM dimension_tab GROUP BY pdt_id WHERE pdt type = 'car';" ---> Q1** The cluster cache is built for this query.
2. Now assume the second query arriving be **"SELECT sales_value, sales_piece FROM dimension_tab ORDER BY pdt_id WHERE pdt type = 'car';"** ---> **Q2** It is understood that this query is eligible for clustering. For this query the cluster column and the filtering condition matches the query 1. Hence this query can use the data in the cluster cache.
3. Now assume the third query arriving be **"SELECT SUM(sales_value), SUM(sales_piece) FROM dimension_tab GROUP BY pdt_id WHERE pdt_type** = **'bike';" ---> Q3**

It is understood that the query is eligible for clustering. However the condition for this query does not match the condition of the cluster cache. Hence this query **cannot** use the data in the cluster cache.

Exemplary embodiments discussed above may provide certain advantages. Though not required to practice aspects of the disclosure, these advantages may include:
1. The mechanism disclosed in the present invention improves performance of OLAP queries which tend to be grouped on the same set of columns. The key benefit is achieved when there are less writes and more queries.
2. The mechanism discloses the concept of intermediate result caching to grouped aggregates. It caches the cluster information to avoid the clustering operation for each query execution and thus reducing the cost of query execution.
3. The mechanism in the "Continuous ETL" scenario of Smart PCC improves the performance of the queries by more than70%.
4. The mechanism uses a cache for storing clustering information/cluster data of frequently used columns in group aggregate operations to improve the performance of parallel group aggregate operation.
5. The mechanism distributes the clustering information in different NUMA node to avoid remote read of memory and thereby increase the local memory usage and to reduce the cache misses.
6. The mechanism manages the cluster cache using user given information to control the use of system memory through system configuration.
7. The mechanism manages the cache with the help of usage statistics so to avoid having stale data in the cluster cache.
8. The mechanism allows user to add or remove cluster information using SQL command to increase the flexibility for the user.
9. The mechanism improves group aggregate execution speed by caching intermediate results to benefit many queries.
10. The mechanism provides user configurable and manageable cache to store the clustering information about columns used in group aggregate.
11. The mechanism enables evacuation of unused clustering information from the cache to make space for the new clustering information (to accommodate space for the frequently used columns.).

## Claims

1. A system (100) for parallel optimization of a database query requesting data from a database (110), wherein the system comprises:
a processor (104) coupled to a memory (108), and the processor configured to:
determine (112), based on a nature and/or a statistics of the database query received, if the database query needs clustering, wherein the nature of the database query received is the characteristics of the database query selected from a group comprising: (i) attributes of a GROUP BY clause, (ii) attributes of a WHERE clause, (iii) attributes of a JOIN clause, (iv) attributes of a HAVING clause, and (v) attributes of a grouped aggregation function, wherein the statistics is histogram based statistics or selectivity statistics;
cluster (114), if determined the query needs clustering, data present in the database based on the database query received, and displaying result of the query to a user after query processing;
retain (116) the clustered data, wherein the clustered data comprises at least one of global row id's or records stored in tables of the database, or subset of records stored in tables of the database based on the systems configuration, and thereby create at least one cluster cache for the clusters created by the clustering results comprising a cluster metadata, at least one data element, and the cluster data retained; and
reuse (118) the clustered data from the cluster cache, when a new query is received and if the new query is matched with the at least one data element and/or cluster metadata, for query processing, wherein the at least one data element comprises at least one of table Id, cluster column, clustering model, filter condition, memory affinity, or any combination thereof.

2. The system as claimed in claim 1, wherein the reuse of the clustered data from the cluster cache further comprises: if the clustered data is already available in the cluster cache and if available, reuse the clustered data for the processing of the new query.

3. The system as claimed in claim 1 or 2, wherein the clustering is performed by any one of the technique for clustering selected from radix based clustering, or hash based clustering, or any combination thereof.

4. The system as claimed in claim 1, wherein the grouped aggregation function included in the database query is selected from the COUNT, AVG, SUM, MIN, MAX, VARIANCE, and STANDARD_DEVIATION aggregation functions.

5. A method for parallel optimization of a database query requesting data from a database, wherein the method comprises:
determining (602), based on a nature and/or a statistics of the database query received, if the database query needs clustering, wherein the nature of the database query received is the characteristics of the database query selected from the group comprising: (i) attributes of a GROUP BY clause, (ii) attributes of a WHERE clause, (iii) attributes of a JOIN clause, (iv) attributes of a HAVING clause, and (v) attributes of a grouped aggregation function, wherein the statistics is histogram based statistics or selectivity statistics;
clustering (604), if determined the query needs clustering, data present in the database based on the database query received, and displaying result of the query to a user;
retaining (606) the clustered data, wherein the clustered data comprises at least one of global row id's or records stored in tables of the database, or subset of records stored in tables of the database based on the systems configuration;
creating at least one cluster cache comprising a cluster metadata for the clusters created by the clustering results, at least one data element, and the cluster data retained; and
reusing (608) the clustered data from the cluster cache, when a new query is received and if the new query is matched with the at least one data element and/or cluster metadata, for the processing of the new query, wherein the at least one data element comprises at least one of table Id, cluster column, clustering model, filter condition, memory affinity, or any combination thereof.

6. The method as claimed in claim 5 comprises reusing the clustered data for the processing of the new query, if the clustered data is already available in the cluster cache.

7. The method as claimed in claim 5 wherein the grouped aggregation function included in the database query is selected from the COUNT, AVG, SUM, MIN, MAX, VARIANCE, and STANDARD_DEVIATION aggregation functions.

## Patentansprüche

1. System (100) für eine parallele Optimierung einer Datenbankabfrage, die Daten von einer Datenbank (110) anfordert, wobei das System Folgendes umfasst:
einen Prozessor (104), der mit einem Speicher (108) gekoppelt ist und wobei der Prozessor für Folgendes konfiguriert ist:
Bestimmen (112), basierend auf einer Art und/oder einer Statistik der empfangenen Datenbankabfrage, ob die Datenbankabfrage ein Clustering erfordert, wobei die Art der empfangenen Datenbankabfrage die Merkmale der Datenbankabfrage sind, die aus einer Gruppe ausgewählt sind, die Folgendes umfasst: (i) Attribute einer GROUP-BY-Klausel, (ii) Attribute einer WHERE-Klausel, (iii) Attribute einer JOIN-Klausel, (iv) Attribute einer HAVING-Klausel und (v) Attribute einer gruppierten Aggregationsfunktion, wobei die Statistiken histogrammbasierte Statistiken oder Selektivitätsstatistiken sind;
Clustern (114), falls bestimmt wird, dass die Abfrage das Clustering erfordert, von Daten, die in der Datenbank vorhanden sind, basierend auf der empfangenen Datenbankabfrage und Anzeigen des Ergebnisses der Abfrage an einen Benutzer nach dem Abfrageverarbeiten;
Zurückhalten (116) der geclusterten Daten, wobei die geclusterten Daten globale Zeilen-IDs oder Datensätze, die in Tabellen der Datenbank gespeichert sind, und/oder eine Teilmenge von Datensätzen, die in Tabellen der Datenbank basierend auf der Systemkonfiguration gespeichert sind, umfassen und wobei dadurch wenigstens ein Cluster-Cache für die Cluster erstellt wird, die durch Clustering von Ergebnissen erstellt werden, die Cluster-Metadaten, wenigstens ein Datenelement und die zurückgehaltenen Cluster-Daten umfassen; und
Wiederverwenden (118) der geclusterten Daten aus dem Cluster-Cache für das Abfrageverarbeiten, wenn eine neue Abfrage empfangen wird und falls die neue Abfrage mit dem wenigstens einen Datenelement und/oder den Cluster-Metadaten abgeglichen wird, wobei das wenigstens eine Datenelement eine Tabellen-ID, eine Cluster-Spalte, ein Cluster-Modell, eine Filterbedingung, Speicheraffinität und/oder eine beliebige Kombination davon umfasst.

2. System nach Anspruch 1, wobei die Wiederverwendung der geclusterten Daten aus dem Cluster-Cache ferner Folgendes umfasst: falls die geclusterten Daten bereits in dem Cluster-Cache verfügbar sind und, falls verfügbar, Wiederverwenden der geclusterten Daten für das Verarbeiten der neuen Abfrage.

3. System nach Anspruch 1 oder 2, wobei das Clustering durch eine beliebige der Techniken zum Clustering durchgeführt wird, die aus radixbasiertem Clustering oder Hash-basiertem Clustering oder einer beliebigen Kombination davon ausgewählt ist.

4. System nach Anspruch 1, wobei die gruppierte Aggregationsfunktion, die in der Datenbankabfrage beinhaltet ist, aus den Aggregationsfunktionen COUNT, AVG, SUM, MIN, MAX, VARIANCE und STANDARD_DEVIATION ausgewählt ist.

5. Verfahren für die parallele Optimierung einer Datenbankabfrage, die Daten von einer Datenbank anfordert, wobei das Verfahren Folgendes umfasst:
Bestimmen (602), basierend auf einer Art und/oder einer Statistik der empfangenen Datenbankabfrage, ob die Datenbankabfrage das Clustering erfordert, wobei die Art der empfangenen Datenbankabfrage die Merkmale der Datenbankabfrage sind, die aus der Gruppe ausgewählt sind, die Folgendes umfasst: (i) Attribute einer GROUP-BY-Klausel, (ii) Attribute einer WHERE-Klausel, (iii) Attribute einer JOIN-Klausel, (iv) Attribute einer HAVING-Klausel und (v) Attribute einer gruppierten Aggregationsfunktion, wobei die Statistiken histogrammbasierte Statistiken oder Selektivitätsstatistiken sind;
Clustering (604), falls bestimmt wird, dass die Abfrage das Clustering erfordert, von Daten, die in der Datenbank vorhanden sind, basierend auf der empfangenen Datenbankabfrage und Anzeigen des Ergebnisses der Abfrage an einen Benutzer;
Zurückhalten (606) der geclusterten Daten, wobei die geclusterten Daten globale Zeilen-IDs oder Datensätze, die in Tabellen der Datenbank gespeichert sind, und/oder die Teilmenge von Datensätzen, die in Tabellen der Datenbank basierend auf der Systemkonfiguration gespeichert sind, umfassen;
Erzeugen wenigstens eines Cluster-Caches, der Cluster-Metadaten für die durch die Clustering-Ergebnisse erzeugten Cluster, wenigstens ein Datenelement und die zurückgehaltenen Cluster-Daten umfasst; und
Wiederverwenden (608) der geclusterten Daten aus dem Cluster-Cache für das Verarbeiten der neuen Abfrage, wenn eine neue Abfrage empfangen wird und falls die neue Abfrage mit dem wenigstens einen Datenelement und/oder den Cluster-Metadaten abgeglichen wird, wobei das wenigstens eine Datenelement eine Tabellen-ID, eine Cluster-Spalte, ein Cluster-Modell, eine Filterbedingung, Speicheraffinität und/oder eine beliebige Kombination davon umfasst.

6. Verfahren nach Anspruch 5, das das Wiederverwenden der geclusterten Daten für das Verarbeiten der neuen Abfrage umfasst, falls die geclusterten Daten bereits in dem Cluster-Cache verfügbar sind.

7. Verfahren nach Anspruch 5, wobei die gruppierte Aggregationsfunktion, die in der Datenbankabfrage beinhaltet ist, aus den Aggregationsfunktionen COUNT, AVG, SUM, MIN, MAX, VARIANCE und STANDARD_DEVIATION ausgewählt ist.

## Revendications

1. Système (100) d'optimisation parallèle d'une interrogation de base de données demandant des données à partir d'une base de données (110), le système comprenant :
un processeur (104) couplé à une mémoire (108), et le processeur étant configuré pour :
déterminer (112), en fonction d'une nature et/ou d'une statistique de l'interrogation de base de données reçue, si l'interrogation de base de données nécessite une mise en grappe, la nature de l'interrogation de base de données reçue étant les caractéristiques de l'interrogation de base de données sélectionnée dans un groupe comprenant : (i) des attributs d'une clause GROUP BY, (ii) des attributs d'une clause WHERE, (iii) des attributs d'une clause JOIN, (iv) des attributs d'une clause HAVING et (v) des attributs d'une fonction d'agrégation groupée, la statistique étant une statistique basée sur un histogramme ou une statistique de sélectivité ;
mettre en grappe (114), s'il est déterminé que l'interrogation nécessite une mise en grappe, les données présentes dans la base de données en fonction de l'interrogation de base de données reçue, et l'affichage du résultat de l'interrogation à un utilisateur après le traitement de l'interrogation ;
conserver (116) les données en grappe, les données en grappe comprenant des identifiants de rangée globale ou des enregistrements stockés dans des tables de la base de données et/ou un sous-ensemble d'enregistrements stockés dans des tables de la base de données en fonction de la configuration des systèmes, et créer ainsi au moins un cache de grappe pour les grappes créées par les résultats de mise en grappe comprenant une métadonnée de grappe, au moins un élément de données et les données de grappe conservées ; et
réutiliser (118) les données en grappe du cache de grappe, lorsqu'une nouvelle interrogation est reçue et si la nouvelle interrogation est mise en correspondance avec l'au moins un élément de données et/ou une métadonnée de grappe, pour le traitement de l'interrogation, l'au moins un élément de données comprenant au moins un parmi un identifiant de table, une colonne de grappe, un modèle de mise en grappe, une condition de filtre, une affinité de mémoire ou leur combinaison quelconque.

2. Système selon la revendication 1, la réutilisation des données en grappe du cache de grappe comprenant en outre : si les données en grappe sont déjà disponibles dans le cache de grappe et si disponibles, réutiliser les données en grappe pour le traitement de la nouvelle interrogation.

3. Système selon la revendication 1 ou 2, le regroupement étant effectué par l'une quelconque des techniques de mise en grappe sélectionnée parmi la mise en grappe basée sur la base de numération ou la mise en grappe basée sur le hachage ou leur combinaison quelconque.

4. Système selon la revendication 1, la fonction d'agrégation groupée comprise dans l'interrogation de base de données étant sélectionnée parmi les fonctions d'agrégation COUNT, AVG, SUM, MIN, MAX, VARIANCE et STANDARD_DEVIATION.

5. Procédé d'optimisation parallèle d'une interrogation de base de données demandant des données à partir d'une base de données, le procédé comprenant :
la détermination (602), sur la base d'une nature et/ou d'une statistique de l'interrogation de base de données reçue, si l'interrogation de base de données nécessite une mise en grappe, la nature de l'interrogation de base de données reçue étant les caractéristiques de l'interrogation de base de données sélectionnée dans le groupe comprenant : (i) les attributs d'une clause GROUP BY, (ii) les attributs d'une clause WHERE, (iii) les attributs d'une clause JOIN, (iv) les attributs d'une clause HAVING et (v) les attributs d'une fonction d'agrégation groupée, la statistique étant une statistique basée sur un histogramme ou une statistique de sélectivité ;
la mise en grappe (604), s'il est déterminé que l'interrogation nécessite une mise en grappe, des données présentes dans la base de données en fonction de l'interrogation de base de données reçue, et l'affichage du résultat de l'interrogation à un utilisateur ;
la conservation (606) des données en grappe, les données en grappe comprenant des identifiants de rangée globale ou des enregistrements stockés dans des tables de la base de données et/ou un sous-ensemble d'enregistrements stockés dans des tables de la base de données sur la base de la configuration des systèmes ;
la création d'au moins un cache de grappe comprenant une métadonnée de grappe pour les grappes créées par les résultats de mise en grappe, au moins un élément de données et les données de grappe conservées ; et
la réutilisation (608) des données en grappe du cache de grappe, lorsqu'une nouvelle interrogation est reçue et si la nouvelle interrogation est mise en correspondance avec l'au moins un élément de données et/ou une métadonnée de grappe, pour le traitement de la nouvelle interrogation, l'au moins un élément de données comprenant au moins un parmi un identifiant de table, une colonne de grappe, un modèle de mise en grappe, une condition de filtre, une affinité de mémoire ou leur combinaison quelconque.

6. Procédé selon la revendication 5, comprend la réutilisation des données en grappe pour le traitement de la nouvelle interrogation, si les données en grappe sont déjà disponibles dans le cache de grappe.

7. Procédé selon la revendication 5, la fonction d'agrégation groupée comprise dans l'interrogation de base de données étant sélectionnée parmi les fonctions d'agrégation COUNT, AVG, SUM, MIN, MAX, VARIANCE et STANDARD_DEVIATION.
